# EUROPÄISCHE PATENTSCHRIFT

(11) **EP 1 514 965 B1**
(45) Veröffentlichungstag und Bekanntmachung des Hinweises auf die Patenterteilung: **27.10.2010**
(21) Anmeldenummer: 04018996.1
(22) Anmeldetag: 11.08.2004
(51) Int. Cl.: D06F 37/00

(54) **Waschmaschine mit einer Dichtungsanordnung**
Washing machine with a sealing arrangement
Machine à laver avec dispositif d'étanchéité

(30) Priorität: 11.09.2003 DE 10342262
(43) Veröffentlichungstag der Anmeldung: 16.03.2005
(73) Patentinhaber: Miele & Cie. KG, 33332 Gütersloh (DE)
(72) Erfinder: Eckert, Norbert, 33102 Paderborn (DE); Maass, Heinz, 33378 Rheda-Wiedenbrück (DE)

(56) Entgegenhaltungen:
- EP-A1- 0 579 849
- DE-A1- 3 838 824
- DE-A1- 4 422 853
- DE-A1- 10 133 892
- US-A- 2 835 123

## Beschreibung

Die Erfindung betrifft eine Waschmaschine mit einem im Wesentlichen zylindrischen Laugenbehälter und mit einer darin drehbar gelagerten ebenfalls zylindrischen Trommel, wobei zur drehbaren Lagerung der Trommel an deren Boden ein Wellenzapfen angeordnet ist, welcher sich durch eine Öffnung im Laugenbehälterboden erstreckt und von mindestens zwei Lagern aufgenommen wird, welche innerhalb eines Lagergehäuses angeordnet sind, und wobei zur Abdichtung der Öffnung eine Dichtungsanordnung vorgesehen ist, die mit einem dynamisch beanspruchten Dichtungsteil an dem Wellenzapfen oder einem auf dem Wellenzapfen angeordneten Laufring und mit einem statisch beanspruchten Dichtungsteil am Laugenbehälterboden oder am Lagergehäuse anliegt und laugenseitig vor diesen Dichtungsteilen eine Vorabschirmung besitzt.

Eine solche Waschmaschine ist aus der DE 44 22 853 A1 bekannt.

Die zur Lagerung des Wellenzapfens einer Waschmaschinentrommel verwendeten Wälzlager können nur störungsfrei arbeiten und hohe Gebrauchszeiten erreichen, wenn sie durch wirksame Dichtungen während der gesamten Betriebszeit geschützt werden, so dass das Eindringen von Schmutz und das Austreten von Schmierstoff verhindert wird. Bei Trommelwaschmaschinen ist es besonders wichtig, den Eintritt von Kondenswasser und Lauge aus dem Laugenbehälter in das Lager zu verhindern. Hierzu ist es bekannt, vor dem Lager Radialwellendichtringe einzusetzen. Es entstehen jedoch bei zunehmender Alterung und insbesondere bei einem Kontakt der Dichtringe mit Waschlauge Undichtigkeiten, welche das Eindringen von Flüssigkeit in das Lager ermöglichen und dessen Ausfall verursachen. Bei der eingangs beschriebenen Waschmaschine ist deshalb zum Schutz der Dichtringe vor Waschlauge auf dem Wellenzapfen ein erstes, im Wesentlichen kreisringförmiges Schutzelement angeordnet, welches mit einem am Lagergehäuse oder am Laugenbehälterboden angeordneten zweiten Schutzelement eine labyrinthartige Vorabschirmung bildet. Solche Labyrinthdichtungen benötigen immer zwei Bauteile, was ihre Herstellung und ihre Montage verteuert. Bei anderen Ausführungsformen wird ein Teil des Labyrinths durch das elastische Dichtungsmaterial selbst gebildet, wodurch dieses mit Lauge in Kontakt kommt. Dies hat einen schnelleren Verschleiß des nur gering laugenbeständigen Elastomers zur Folge.

Aus der DE 101 33 892 A1 ist es bekannt, auf der Laugenbehälterinnenseite einen Führungsflansch anzubringen, der den Wellenzapfen umgibt. Im radialen Abschnitt des Führungsflansches ist eine umlaufende Nut eingeformt, in die der äußere Rand einer am Wellenzapfen angebrachten Schleuderscheibe ragt. Dadurch wird ein labyrinthartiger Spalt geschaffen, der eine Vorabschirmung für den Radialwellendichtring bereitstellt. Bei dieser Anordnung ist es jedoch möglich, dass Spritzwasser an die Laugenbehälterinnenseite gelangt und in Richtung des Wellenzapfens abläuft. Hierbei kann das Wasser aufgrund des Kriechverhaltens durch die Nut zum Radialwellendichtring gelangen, so dass dieser eine gute Dichtwirkung bereitstellen muss.

Aus der US 2,835,123 ist es bekannt, an der Nabe auf der Laugenbehälterinnenseite eine Vorabschirmung anzubringen, die im Querschnitt einen konischen bzw. zur Trommel hin ansteigenden Verlauf hat und gemeinsam mit einem umlaufenden Steg an der rückseitigen Trommelwand ein Labyrinth bildet. Für diesen Aufbau werden mehrere Einzelteile benötigt. Ferner muss ein großer, axialer Abstand zwischen Laugenbehälterinnenseite und der rückseitigen Trommelwand eingehalten werden, damit die labyrinthartige Vorabschirmung dort angebracht werden kann.

Der Erfindung stellt sich somit das Problem, eine Waschmaschine der eingangs genannten Art dahingehend zu verbessern, dass die elastischen und/oder nur gering laugenbeständigen Dichtungsteile sicher und preiswert vor einem Kontakt mit Waschlauge geschützt werden.

Erfindungsgemäß wird dieses Problem durch eine Waschmaschine mit den Merkmalen des Patentanspruchs 1 gelöst. Vorteilhafte Ausgestaltungen und Weiterbildungen der Erfindung ergeben sich aus den nachfolgenden Unteransprüchen.

Durch die Ausstattung einer Waschmaschine mit der erfindungsgemäßen Dichtungsanordnung werden die Kontaktzeiten der Dichtungsteile mit Waschlauge erheblich verringert. Aufgrund ihrer Form wird die in den Bereich der Durchführungsöffnung eintretende Waschlauge sicher und umgehend aus dem Dichtungsbereich in den unteren Bereich des Laugenbehälters abgeführt.

In der erfindungsgemäßen Ausführungsform erstreckt sich der der Querschnittsöffnung gegenüberliegende Vereinigungsbereich der beiden Schenkel der Vorabschirmung bis annähernd in den Bereich des Wellenzapfens bzw. des Laufrings . Hierdurch werden die Dichtungsteile komplett abgeschirmt.

In einer weiteren vorteilhaften Ausführungsform fungiert die Vorabschirmung als Träger für wenigstens einen Dichtungsteil (Anspruch 2). Hierdurch kann auf Versteifungsringe aus Metall verzichtet werden, so dass insgesamt eine preiswerte und einfach zu fertigende Dichtungsanordnung realisierbar ist.

Um festere Anordnungen zu erreichen, kann laugenseitig hinter dem ersten, d.h. dem dynamisch beanspruchten, und zweiten, d.h. dem statisch beanspruchten, Dichtungsteil ein Versteifungsring angeordnet sein (Anspruch 3). Dabei wird in vorteilhafter Weise der Versteifungsring an der Vorabschirmung unter Zwischenlage des ersten und zweiten Dichtungsteils befestigt (Anspruch 4). Auf diese Weise ergibt sich eine sehr stabile, langlebige Anordnung, bei welcher für den Versteifungsring keine weiteren Halterungsmechanismen erforderlich sind.

Es ist außerdem vorteilhaft, wenn die Vorabschirmung mit einer Abflussbohrung ausgestattet ist welche sich im Einbauzustand etwa in der Sechs-Uhr-Position befindet (Anspruch 5). Durch die Bohrung kann Kondenswasser oder Lauge, welche(s) die Vorabschirmung passiert hat, in den unteren Bereich des Laugenbehälters abfließen.

Die Vorabschirmung ist erfindungsgemäß wenigstens teilweise aus einem laugenbeständigen Kunststoff hergestellt. Dies führt dazu, dass eine freie Formgestaltung möglich ist. Hierbei ist wenigstens der Teil der Vorabschirmung, der aus dem laugenbeständigen Kunststoff besteht, an den Laugenbehälter angeformt. Hierdurch kann die Vorabschirmung rationell zusammen mit dem Laugenbehälter oder Teilen davon in einem einzigen Spritzgussverfahren hergestellt werden.

Ausführungsbeispiele der Erfindung sind in den Zeichnungen rein schematisch dargestellt und werden nachfolgend näher beschrieben. Es zeigen:
- Figur 1: die Lageranordnung einer Waschmaschine in der Seitenansicht im Schnitt;
- Figur 1a, 2 bis 6: als Ausschnitte einer Dichtungsanordnung als Teil der Lageranordnung.
- Figur 7 bis 9: als Ausschnitte einer erfindungsgemäßen Waschmaschine.

In den Figuren sind gleiche oder gleichwirkende Teile durchgängig mit identischen Bezugszeichen versehen.

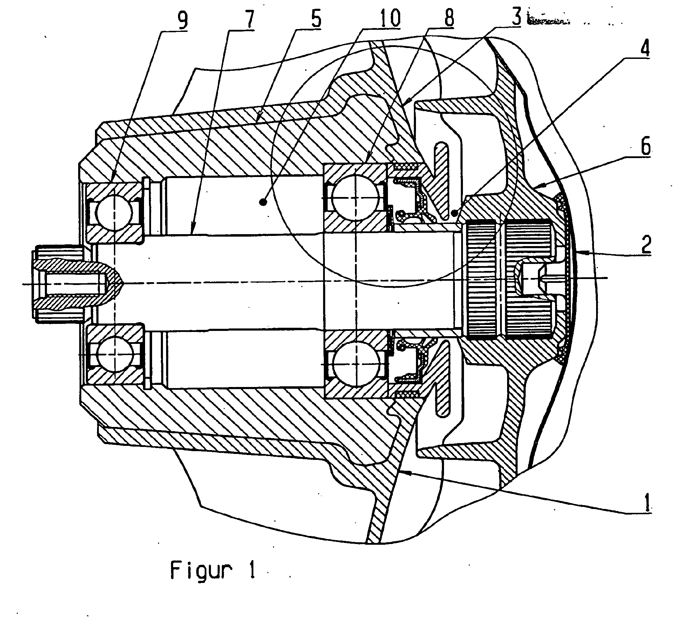

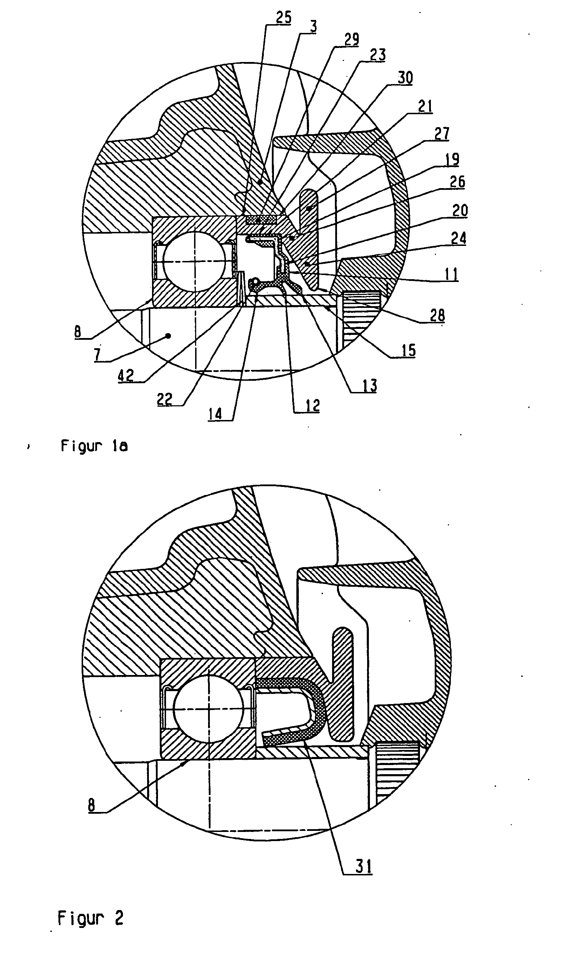

Die Waschmaschine gemäß Figur 1 besitzt einen im Wesentlichen zylindrischen Laugenbehälter (1) und eine darin drehbar gelagerte, ebenfalls zylindrische Trommel (2) zur Aufnahme der Wäsche (nicht dargestellt). Der Laugenbehälter (1) ist vorzugsweise aus laugenbeständigem Kunststoff hergestellt. Er besitzt im Zentrum seines Bodens (3) eine Öffnung (4), hinter der ein Lagergehäuse (5) angeordnet ist. Es wird von einem nicht dargestellten Lagerkreuz getragen, welches mit seinen äußeren Enden am Rand der Mantelfläche (nicht dargestellt) des Laugenbehälters (1) oder direkt am Boden (3) befestigt ist. Ein mit der Trommel (2) über einen Flansch (6) verbundener Wellenzapfen (7) ist durch die Öffnung (4) hindurch geführt. Die Lagerung für die Trommel (2) besteht aus einem vorderen und einem hinteren Radialkugellager (8, 9), die durch Presspassung in der Innenbohrung (10) des Lagergehäuses (5) fixiert sind und den Wellenzapfen (7) aufnehmen. Das vordere Lager (8) wird durch eine nachfolgend beschriebene Dichtungsanordnung geschützt, die entweder in die Innenbohrung (10) des Lagergehäuses (5) oder die davor befindliche Öffnung (4) des Laugenbehälterbodens (3) eingesetzt ist.

Die in Figur 1a dargestellte Dichtungsanordnung beinhaltet einen elastischen Radialwellendichtring (11), beispielsweise aus NBR, der mit drei dynamisch beanspruchten Dichtlippen (12, 13, 14) an einem Laufring (15) anliegt. Der Laufring (15) ist durch Presspassung auf den Wellenzapfen (7) aufgesetzt. Die Dichtlippen (12, 13, 14) sind an einen Versteifungsring (19) aus verzinktem Stahlblech anvulkanisiert, der ein rechtwinkliges Profil und dadurch einen radial gerichteten Abschnitt (20) und einen axial gerichteten Abschnitt (21) aufweist. Eine umlaufende Spiralfeder (22) an der Dichtlippe (14) sorgt für eine besseren Kontakt mit dem Laufring (15).

Ein weiterer Bestandteil der dargestellten Dichtungsanordnung ist eine Vorabschirmung, die dem Radialwellendichtring (11) laugenseitig vorangestellt ist. Diese Vorabschirmung besteht aus einem Umlaufring (24) mit im Wesentlichen v - förmigem, nach außen geöffnetem Querschnitt und einem Randansatz (25), der an den in der Figur links angeordneten, d. h., den laugenseitig hinteren Schenkel (26) angeformt ist. Die so gebildete Vorabschirmung umgibt den Wellenzapfen (7) und schützt mit ihrem Umlaufring (24) den Radialwellendichtring (11) vor einer Berieselung mit Lauge, welche von der drehenden Trommel (2) aus dem unteren Bereich des Laugenbehälters (1) in den oberen Bereich mitgerissen wird. Der Vereinigungsbereich (28) der beiden Schenkel (26, 27) der Vorabschirmung erstreckt sich deshalb bis annähernd in den Bereich des Laufrings (15). Der Randansatz (25) liegt mit einer auf seiner äußeren Umfangsfläche angeordneten Dichtung (29) an dem durch die Öffnung (4) gebildeten Rand des Laugenbehälterbodens (3) an. Zu diesem Zweck ist der Rand verdickt und mit einer axial gerichteten Anlagefläche (30) ausgestattet. Die Dichtung (29) besteht aus einem thermoplastischen Elastomer (TPE-O), der Rest der Vorabschirmung ist aus einem laugenbeständigen Kunststoff, beispielsweise Polypropylen, gefertigt. Die gesamte Vorabschirmung kann in einem Zweikomponenten-Spritzgussverfahren hergestellt werden. Die Dichtung (29) bildet gegenüber dem Laugenbehälterboden (3) den statisch beanspruchten Teil der Dichtungsanordnung. Um eine flüssigkeitsdichte Anlage des Radialwellendichtrings (11) an der inneren Umfangsfläche des Randansatzes zu erreichen, kann der axiale Bereich des Versteifungsrings (19) auf seiner äußeren Umfangsfläche mit einer anvulkanisierten Dichtung (23) versehen sein.

Figur 2 zeigt eine Dichtungsanordnung, bei der anstelle eines Radialwellendichtrings aus elastischem Material eine Dichtung (31) aus PTFE eingesetzt ist, welche auf einem federnden Metallring angebracht ist. Die Vorabschirmung ist bis auf die Dichtung (29, s. Figur 1 a) identisch zu der in Figur 1 dargestellten Ausführungsform.

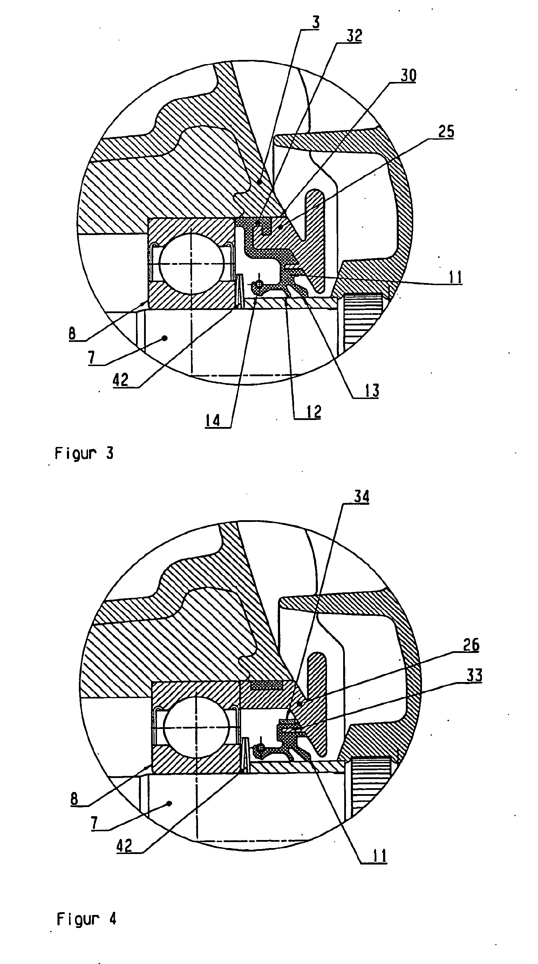

Bei der in Figur 3 dargestellten Dichtungsanordnung sind der Randansatz (25) der Vorabschirmung und der äußere Rand (32) des Radialwellendichtrings (11) so geformt, dass der Radialwellendichtring (11) in den Randansatz (25) eingeknüpft werden kann und so durch Formschluss in der Vorabschirmung gehalten wird. Hierdurch entfällt die Notwendigkeit eines Versteifungsrings. In der dargestellten Ausführungsform liegt der Rand (32) des Radialwellendichtrings (11) direkt an der Anlagefläche (30) des Laugenbehälterbodens (3) an und bildet damit den statisch beanspruchten Teil der Dichtungsanordnung. Deswegen kann auf die angespritzte Santoprene-Dichtung verzichtet und die Vorabschirmung vollständig aus Polypropylen gefertigt werden. Den dynamisch beanspruchten Teil der Dichtungsanordnung bilden wie bei der Ausführungsform in Figur 1 drei radial gerichtete Dichtlippen (12, 13, 14).

Die Dichtungsanordnung in Figur 4 beinhaltet eine Vorabschirmung wie in den Figuren 1 und 2, wobei an dem laugenseitig hinteren Schenkel (26) ein Haltesteg (33) angeformt ist. Auf diesen Haltesteg (33) wird ein Radialwellendichtring (11) aufgesteckt und mit einem Spannband (34) kraftschlüssig fixiert.

Alle vier vorbeschriebenen Vorabschirmungen können eine Abflussbohrung (nicht dargestellt) besitzen, welche sich im Einbauzustand etwa in der Sechs-Uhr-Position befindet. Hierüber wird Flüssigkeit, die trotz Vorabschirmung in den Hohlraum vor dem Radialwellendichtring (11) eingedrungen ist, in den unteren Bereich des Laugenbehälters (1) zurückgeleitet.

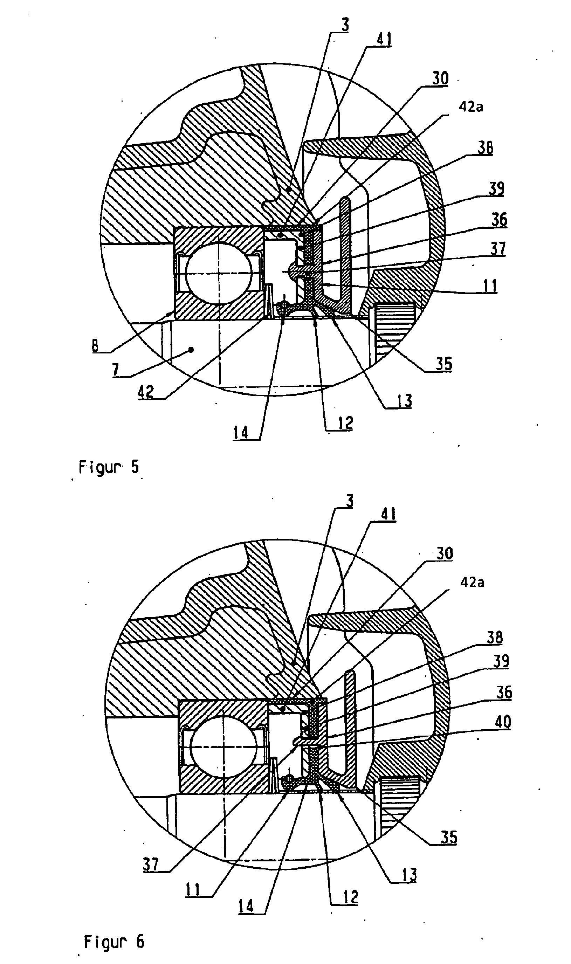

Die Figuren 5 und 6 zeigen Dichtungsanordnungen, bei denen die Vorabschirmungen einen Ring (35) mit u-förmigem Profil besitzen. Sie sind ebenfalls aus laugenfestem Kunststoff, beispielsweise Polypropylen, hergestellt. An den laugenseitig hinteren Schenkel (36) ist ein Befestigungszapfen (37) angeformt. Weiteres Bestandteil der dargestellten Dichtungsanordnungen ist ein Versteifungsring (38), der ein rechtwinkliges Profil besitzt. In dem radialen Schenkel (39) ist eine Öffnung (40) angeordnet, durch die sich der Befestigungszapfen (37) erstreckt. Hierdurch können Versteifungsring (38) und Vorabschirmung miteinander verbunden werden, entweder durch Verschweißen (Figur 5) oder durch Verrasten (Figur 6). Dabei klemmen sie zwischen sich einen Radialwellendichtring (11) ein. Dieser Radialwellendichtring (11) besitzt die aus den Figuren 1, 3 und 4 bekannten drei radialen Dichtlippen (12, 13, 14) als dynamisch beanspruchte Dichtungen. Als statische Dichtung wird durch den axialen Schenkel (41) des Versteifungsrings (38) ein ebenfalls axial gerichteter Abschnitt (42a) des Radialwellendichtrings (11) an die Anlagefläche am Rand des Laugenbehälterbodens (3) gedrückt.

Zur Spannung der Lager kann, wie in den Figuren 1a und 3 bis 6 dargestellt, zwischen dem vorderen Lager (8) und dem Laufring (15) eine oder zwei Tellerfedern (42) auf den Wellenzapfen (7) aufgeschoben sein.

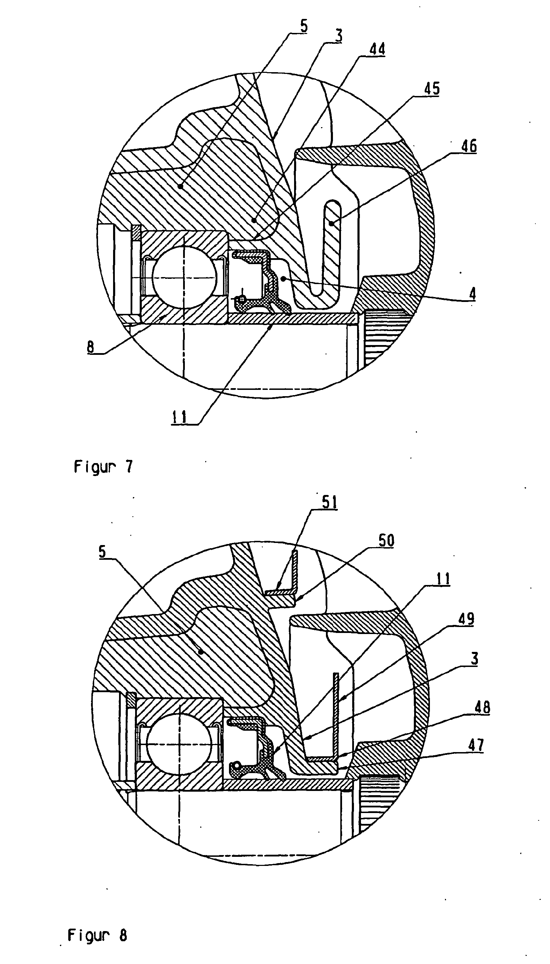

Die Figuren 7 bis 9 zeigen Lageranordnungen von Waschmaschinen, bei denen wenigstens der Laugenbehälterboden (3) zwingend aus einem laugenbeständigen Kunststoff hergestellt sein muss. Bei diesen Lageranordnungen erstreckt sich das Lagergehäuse (5) über das vordere Lager (8) hinaus und bildet so einen Fortsatz (44), um den der Rand (45) des Laugenbehälterbodens (3) im Bereich der Öffnung (4) herumgelegt ist. An diesen Rand (45) ist wenigstens ein Teil der Vorabschirmung angespritzt.

Figur 7 zeigt eine Variante, bei der die Vorabschirmung aus einem Umlaufring (46) mit v-förmigem Profil besteht und vollständig an den Rand (45) angespritzt ist. Als Dichtung fungiert der in Figur 1 dargestellte Radialwellendichtring (11), wobei der axiale Bereich des Versteifungsrings (19) mit seiner anvulkanisierten Dichtung (23) direkt am Rand (45) des Laugenbehälterbodens (3) anliegt.

Bei der in Figur 8 gezeigten Dichtungsanordnung ist die Vorabschirmung als u-förmiger Umlaufring ausgebildet. Hier ist nur der Steg (47) aus laugenbeständigem Kunststoff gefertigt und an den Laugenbehälterboden (3) angespritzt, wobei letzterer selbst den laugenseitig hinteren Schenkel der Vorabschirmung bildet. Zur Komplettierung ist auf den Steg ein Ring (48) aus Edelstahl geklemmt, der ein rechtwinkliges Profil besitzt. Hierdurch wird der laugenseitig vordere Schenkel (49) der Vorabschirmung gebildet. Im Bereich außerhalb des Lagergehäuses (5) ist an den Laugenbehälterboden (3) konzentrisch zur Öffnung ein Steg (50) angeformt. Dieser bildet mit einem aufgesteckten Ring (51) mit abgewinkeltem Profil eine zweite Vorabschirmung. Als Dichtung wird der aus den Figuren 1 und 7 bekannte Radialwellendichtring (11) verwendet.

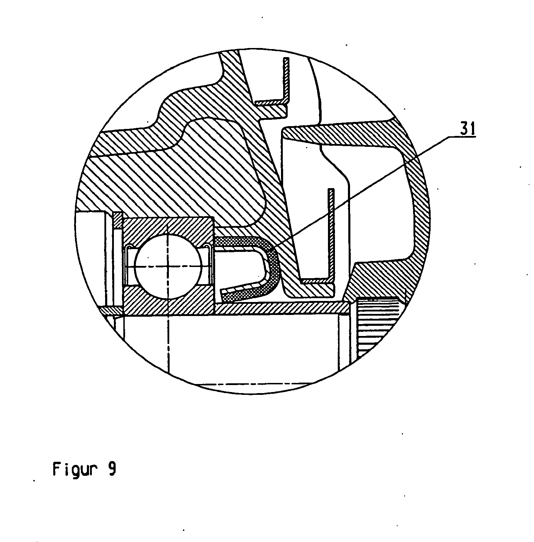

In Figur 9 ist die Vorabschirmung identisch zu der in Figur 8 gezeigten Anordnung. Hier wird aber anstelle des Radialwellendichtrings die aus Figur 2 bekannte Dichtung (31) aus PTFE verwendet.

## Patentansprüche

1. Waschmaschine mit einem im Wesentlichen zylindrischen Laugenbehälter (1) und mit einer darin drehbar gelagerten ebenfalls zylindrischen Trommel (2), wobei zur drehbaren Lagerung der Trommel (2) an deren Boden ein Wellenzapfen (7) angeordnet ist, welcher sich durch eine Öffnung (4) im Laugenbehälterboden (3) erstreckt und von mindestens zwei Lagern (8, 9) aufgenommen wird, welche innerhalb eines Lagergehäuses (5) angeordnet sind, und wobei zur Abdichtung der Öffnung (4) eine Dichtungsanordnung vorgesehen ist, die mit einem dynamisch beanspruchten Dichtungsteil (12, 13, 14) an dem Wellenzapfen (7) oder einem auf dem Wellenzapfen (7) angeordneten Laufring (15) und mit einem statisch beanspruchten Dichtungsteil (23, 29) am Laugenbehälterboden (3) oder am Lagergehäuse (5) anliegt und laugenseitig vor diesen Dichtungsteilen eine Vorabschirmung besitzt,
**dadurch gekennzeichnet,**
**dass** die Vorabschirmung als ein den Wellenzapfen (7) umgebender Umlaufring (24, 46) mit im Wesentlichen v- oder u-förmigem, nach außen geöffnetem Querschnitt ausgebildet ist, so dass sich der der Querschnittsöffnung gegenüberliegende Vereinigungsbereich von zwei das U oder V bildenen Schenkeln (26, 27) der Vorabschirmung bis annähernd in den Bereich des Wellenzapfens (7) bzw. des Laufrings (15) erstreckt, wobei wenigstens ein Teil der Vorabschirmung aus einem laugenbeständigen Kunststoff hergestellt und wenigstens dieser Teil der Vorabschirmung an den Laugenbehälterboden (3), welcher aus einem Laugenbeständigen Kunststoff hergestellt ist, angeformt ist.

2. Waschmaschine mit einer Dichtungsanordnung nach Anspruch 1,
**dadurch gekennzeichnet,**
**dass** die Vorabschirmung als Träger für wenigstens einen Dichtungsteil fungiert.

3. Waschmaschine mit einer Dichtungsanordnung nach mindestens einem der Ansprüche 1 bis 2,
**dadurch gekennzeichnet,**
**dass** laugenseitig hinter dem dynamisch beanspruchten Dichtungsteil (12, 13, 14) und dem statisch beanspruchten Dichtungsteil (23, 29) ein Versteifungsring (38) angeordnet ist.

4. Waschmaschine mit einer Dichtungsanordnung nach Anspruch 3,
**dadurch gekennzeichnet,**
**dass** der Versteifungsring (38) an der Vorabschirmung unter Zwischenlage des dynamisch beanspruchten Dichtungsteils (12, 13, 14) und des statisch beanspruchten Dichtungsteils (23, 29) befestigt ist.

5. Waschmaschine mit einer Dichtungsanordnung nach mindestens einem der Ansprüche 1 bis 4,
**dadurch gekennzeichnet**
**dass** die Vorabschirmung mit einer Abflussbohrung ausgestattet ist welche sich im Einbauzustand etwa in der Sechs-Uhr-Position befindet.

## Claims

1. Washing machine with a substantially cylindrical suds container (1) and a drum (2), also cylindrical, rotatably mounted therein, a shaft journal (7) being arranged on the base of the drum (2) for the rotatable mounting thereof, which shaft journal extends through an opening (4) in the suds container base (3) and is received by at least two bearings (8, 9) arranged inside a bearing housing (5), and a sealing arrangement being provided for sealing the opening (4), which sealing arrangement is fitted on the suds container base (3) or on the bearing housing (5) with a dynamically stressed sealing part (12, 13, 14) on the shaft journal (7) or a raceway (15) arranged on the shaft journal (7) and with a statically stressed sealing part (23, 29) and has a preliminary shield in front of these sealing parts on the suds side,
**characterised in that**
the preliminary shield is formed as a rotating ring (24, 46) encircling the shaft journal (7) and having a substantially V- or U-shaped cross-section open to the outside, in such a way that the junction region of two portions (26, 27) of the preliminary shield which form the U or V, which junction region is opposite the cross-sectional opening, extends almost into the region of the shaft journal (7) and the raceway (15), at least a portion of the preliminary shield being manufactured from suds-resistant plastics material and at least this portion of the preliminary shield being integrally formed on the suds container base (3), which is manufactured from a suds-resistant plastics material.

2. Washing machine with a sealing arrangement according to claim 1,
**characterised in that**
the preliminary shield functions as a support for at least one sealing part.

3. Washing machine with a sealing arrangement according to at least one of claims 1 to 2,
**characterised in that**
a reinforcement ring (38) is arranged on the suds side behind the dynamically stressed sealing part (12, 13, 14) and the statically stressed sealing part (23, 29).

4. Washing machine with a sealing arrangement according to claim 3,
**characterised in that**
the reinforcement ring (38) is fastened on the preliminary shield with interpositioning of the dynamically stressed sealing part (12, 13, 14) and the statically stressed sealing part (23, 29).

5. Washing machine with a sealing arrangement according to at least one of claims 1 to 4,
**characterised in that**
the preliminary shield is provided with an outlet hole which in the assembled state is located in the six o'clock position.

## Revendications

1. Machine à laver avec une cuve de lessivage (1) essentiellement cylindrique et avec un tambour (2) également cylindrique qui y est supporté en rotation, un tourillon d'arbre (7) étant disposé sur le fond du tambour (2) pour le support en tourillon d'arbreement de celui-ci, tourillon d'arbre qui s'étend à travers une ouverture (4) dans le fond de cuve de lessivage (3) et qui est reçu par au moins deux paliers (8, 9) qui sont disposés à l'intérieur d'un logement de palier (5), et un dispositif d'étanchéité étant prévu pour l'étanchéité de l'ouverture (4), dispositif qui appuie, par une partie d'étanchéité (12, 13, 14), soumise à des contraintes dynamiques, contre le tourillon d'arbre (7) ou contre une bague de roulement (15) disposée sur le tourillon d'arbre (7) et, par une partie d'étanchéité (23, 29), soumise à des contraintes statiques, contre le fond de cuve de lessivage (3) ou contre le logement de palier (5), et qui possède côté lessive un pré-bouclier devant ces parties d'étanchéité,
**caractérisée en ce que**
le pré-bouclier est constitué sous forme d'anneau périphérique (24, 46) entourant le tourillon d'arbre (7) avec une section transversale ouverte vers l'extérieur, essentiellement en forme de v ou de u, de sorte que la zone de jonction face à l'ouverture de section transversale s'étend depuis deux branches (26, 27), formant le U ou le V, du pré-bouclier jusqu'à approximativement dans la zone du tourillon d'arbre (7) ou de la bague de roulement (15), au moins une partie du pré-bouclier étant réalisée dans une matière plastique résistante à la lessive, et au moins cette partie du pré-bouclier étant formée sur le fond de cuve de lessivage (3) qui est réalisé dans une matière plastique résistante à la lessive.

2. Machine à laver avec un dispositif d'étanchéité selon la revendication 1,
**caractérisée en ce que**
le pré-bouclier fait office de support pour au moins une partie d'étanchéité.

3. Machine à laver avec un dispositif d'étanchéité selon au moins une des revendications 1 à 2,
**caractérisée en ce que**,
côté lessive, il est disposé un anneau de renfort (38) derrière la partie d'étanchéité (12, 13, 14) soumise à des contraintes dynamiques et derrière la partie d'étanchéité (23, 29) soumise à des contraintes statiques.

4. Machine à laver avec un dispositif d'étanchéité selon la revendication 3,
**caractérisée en ce que**
l'anneau de renfort (38) est fixé sur le pré-bouclier avec intercalation de la partie d'étanchéité (12, 13, 14) soumise à des contraintes dynamiques et de la partie d'étanchéité (23, 29) soumise à des contraintes statiques.

5. Machine à laver avec un dispositif d'étanchéité selon au moins une des revendications 1 à 4,
**caractérisée en ce que**
le pré-bouclier est équipé d'un alésage d'écoulement qui, dans l'état monté, est situé environ dans la position six heures.
